# EUROPEAN PATENT APPLICATION

(11) **EP 4 614 529 A1**
(43) Date of publication of application: **10.09.2025**
(21) Application number: 24161818.0
(22) Date of filing: 06.03.2024
(51) Int. Cl.: H01B 7/14, G02B 6/44, H01B 7/18, H01B 9/00, H01B 11/22, H01B 13/22, H02G 15/08

(54) **SUBMARINE DC POWER CABLE**

(71) Applicant: NKT HV Cables AB, 371 60 Lyckeby (SE)
(72) Inventor: ERIKSSON, Erik, Växjö (SE); WIKNER, Mats, Karlskrona (SE); FAGRELL, Johan, Malmö (SE); CRONHOLM, Kent, Karlskrona (SE); TYRBERG, Andreas, Lyckeby (SE)
(74) Representative: Kransell & Wennborg KB

(57) **Abstract**

A submarine DC power cable (1) comprising: three stranded cores (3a, 3b, 3c), wherein a first core (3a) and a second core (3b) of the three cores (3a, 3b, 3c) are DC power cores, each comprising a conductor (4), and an insulation system (5) arranged around the conductor (4), and wherein a third core (3c) of the three cores (3a, 3b, 3c) is a dummy element having the same outer diameter as the first and the second cores (3a, 3b), or the outer diameter of the third core (3c) deviates at most ±10% from the outer diameter of any of the first and the second cores (3a, 3b), and wherein the third core (3c) in cross-section has a structure that is circular symmetric and which differs from a cross-sectional structure of the first and the second cores (3a, 3b).

## Description

### TECHNICAL FIELD

The present disclosure generally relates to submarine power cables.

### BACKGROUND

Dynamic power cables are typically used to energize floating oil and gas platforms or as array cables in floating wind applications. A dynamic power cable may run through an I-tube extending from the floating platform from which the dynamic power cable is suspended to the seabed. Furthermore, dynamic power cables are typically equipped with a number of devices such as a bend stiffener or bellmouth arranged at the end of the I-tube, and buoyancy and/or ballast modules.

### SUMMARY

It may in some cases be desirable to use dynamic submarine power cables for transporting direct current. This would normally involve installing at least two individual dynamic DC submarine power cables - one for each electric pole. Therefore, at least two sets of bend stiffeners/bellmouths and buoyancy modules would have to be used. Moreover, at least two I-tubes would need to be present. This would make installation lengthy compared to AC power cable installations, and it furthermore makes the water column more crowded with several cables and their respective set of buoyancy and/or ballast modules. Furthermore, static DC submarine power cables would have to be jointed with a respective one of the dynamic DC submarine power cables and each static DC submarine power cable typically requires a respective trench, dug by e.g., a cable plough, which makes the installation even more cumbersome compared to AC power cable installations. Also, if an optical fibre cable is needed this will require a separate set of accessories and an additional I-tube at the platform.

In view of the above an object of the present disclosure is to provide a submarine DC power cable which solves or at least mitigates the problems of the prior art.

There is hence provided a submarine DC power cable comprising: three stranded cores, wherein a first core and a second core of the three cores are DC power cores, each comprising a conductor, and an insulation system arranged around the conductor, and wherein a third core of the three cores is a dummy element having the same outer diameter as the first and the second cores, or the outer diameter of the third core deviates at most ±10% from the outer diameter of any of the first and the second cores, and wherein the third core in cross-section has a structure that is circular symmetric and which differs from a cross-sectional structure of the first and the second cores.

The submarine DC power cable is thus a stranded multi-core power cable, requiring only a single set of buoyancy modules, bend stiffner/bellmouth, and I-tube in case it is a dynamic submarine power cable and a single trench in case it is a static submarine power cable. The submarine DC power cable is moreover easier to install due to the handling of a single circular symmetric structure.

The purpose of the third core, or dummy element, is to fill out space in the submarine DC power cable, such that the three cores form a trefoil configuration. The third core is not an electrical core, i.e., it carries no current in operation.

According to one embodiment the third core is a single extruded dummy element comprising a polymeric material.

According to one embodiment in any cross-section of the third core, the dummy element consists of the polymeric material. The production of the third core can thus be simplified compared to that of the first and the second core.

According to one embodiment the third core consists of the polymeric material and a load-bearing element embedded in the polymeric material. The tensional load on the conductors of the two DC cores may thereby be reduced.

According to one embodiment the load-bearing element is made of metal or synthetic fibres.

According to one embodiment in cross-section of the third core, the load-bearing element is arranged centred.

The load-bearing element may be a load-bearing wire or a tubular element with polymeric material arranged radially inside of and radially outside of the tubular element.

According to one embodiment the load-bearing element comprises steel. The steel may for example be mild steel or a stainless steel.

According to one example, the load-bearing element comprises lead, copper, or aluminium.

According to one embodiment the polymer material is thermosetting. The polymer material may for example be cross-linked polymer (XLPE).

According to one embodiment the polymer material is thermoplastic. The polymer material may for example be polypropylene.

One embodiment comprises: an outermost layer arranged around the three stranded cores, filler profiles arranged between the outermost layer and the three stranded cores, and a fibre optic cable arranged in one of the filler profiles.

Alternatively, the fibre optic cable may be arranged in an armour layer that the submarine DC power cable may be provided with.

According to one embodiment the submarine DC power cable is an HVDC power cable. With HVDC is herein meant a DC voltage of 50 kV or higher.

According to one embodiment the third core has an outer diameter which deviates at most ±5% from the outer diameter of any of the first and the second cores.

The submarine DC power cable may be a dynamic submarine power cable.

There is according to a second aspect provided a power cable system comprising: a first submarine DC power cable according to the first aspect, and a second submarine DC power cable according to the first aspect, connected to the first submarine DC power cable by means of a joint which joints corresponding poles of the first and the second cores, wherein the first submarine DC power cable is a dynamic power cable, and the second submarine DC power cable is a static power cable.

According to one embodiment the joint is a flexible joint or a factory joint.

For the flexible and for the factory joint, the two conductors that are joined are welded together thus forming a conductor joint, and a joint insulation system is rebuilt over the conductor joint. Typically, in the jointing process, the end section of the insulation systems of the two cable lengths that are joined are arranged tapering towards the conductor joint, wherein the joint insulation system is rebuilt by applying tape, or by injection moulding, to form an inner semiconducting layer around the conductor joint, an insulation layer around the inner semiconducting layer, and an outer semiconducting layer around the insulation layer. The inner semiconducting layer is connected to the inner semiconducting layer of the insulation system of the two cable lengths that are joined. Moreover, the insulation layer is connected to the insulation layer of the two cable lengths that are joined. Further, the outer semiconducting layer is connected to the outer semiconducting layer of the two cable lengths that are joined. The flexible or factory joint may be a vulcanised flexible or factory joint, in which case the joint insulation system is vulcanised.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a cross-section of an example of a submarine DC power cable;
Fig, 2 schematically shows a cross-section of another example of a submarine DC power cable; and
Fig. 3 schematically shows a submarine power cable system.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

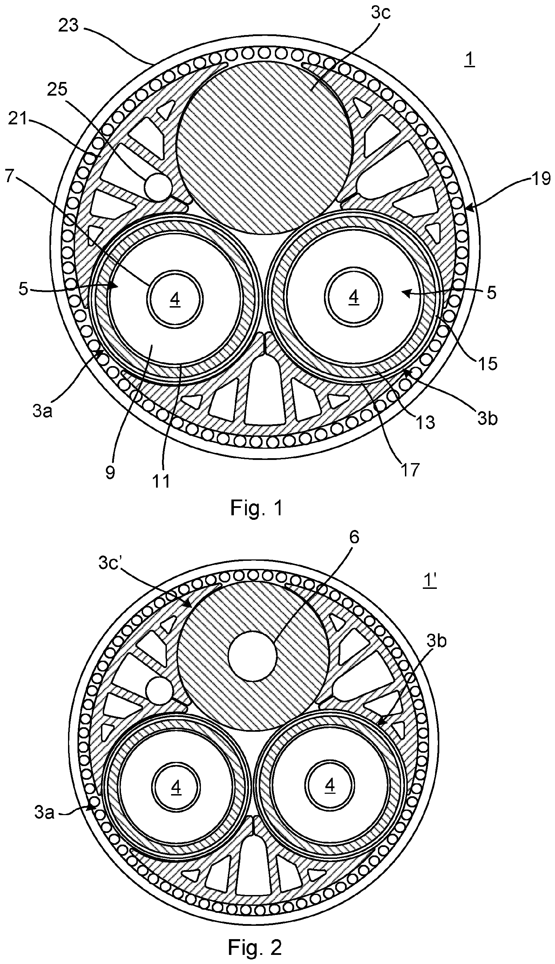

Fig. 1 is a cross-sectional view of an example of a submarine DC power cable 1.

The submarine DC power cable 1 comprises three cores 3a-3c arranged in a stranded configuration.

A first core 3a, and a second core 3b of the three cores are DC power cores. The DC power cores are arranged to carry a load current. A third core 3c of the three cores is a dummy element, which differs from the first core 3a and the second core 3b. Like the first core 3a and the second core 3b, the third core 3c has a circular cross section. The third core 3c has the same outer diameter as each of the first core 3a and the second core 3b. Alternatively, the third core 3c may have an outer diameter which deviates at most ±10%, such as at most ±5%, from the outer diameter of any of the first and the second cores 3a, 3b.

The third core 3c has a structure which in cross-section of the third core is circular symmetric. Thus, the cross-sectional layout or structure of the third core 3c can be mapped onto itself if rotated with any arbitrary angle. That is, the cross-sectional layout or structure is fully rotationally symmetric. The cross-sectional layout or structure is the visual pattern presented by the third core 3c in cross-section, such as its visual configuration of concentric layers if any.

The third core 3c acts as a tubular stranding element with the first core 3a and the second core 3b to make the submarine DC power cable 1 a triple-core stranded submarine DC power cable with a circular cross-section. The third core 3c is not connected to power when the submarine DC power cable 1 has been installed.

According to one example, the third core 3c comprises a polymeric material. In the example shown in Fig. 1, the third core 3c consists of the polymeric material. The third core 3c may be solid. The third core 3c may be composed of a single solid tubular polymer element. The third core 3c may have been formed in a single extrusion.

The polymer material may for example be a thermosetting polymer, such as XLPE. Alternatively, the polymer material may be thermoplastic, such as polypropylene.

Each of the first core 3a and the second core 3b comprises a respective conductor 4, and a respective insulation system 5 arranged around the conductor 4.

The insulation system 5 comprises an inner semiconducting layer 7 arranged around the conductor 4, an insulation layer 9 arranged around the inner semiconducting layer 7, and an outer semiconducting layer 11 arranged around the insulation layer 9. The insulation system 5 may be polymer-based or paper-based. The first insulation system 5 may be extruded.

Each of the first core 3a and the second core 3b may comprise a bedding layer 13 arranged around the insulation system 5. The bedding layer 13 may for example comprise a water-swellable material.

Each of the first core 3a and the second core 3b may comprise a metallic water-blocking sheath 15. The metallic water-blocking sheath 15 may for example be a lead sheath, or it may comprise e.g., copper, stainless steel, or aluminium. The metallic water-blocking sheath 15 may be extruded or longitudinally welded, depending on the metal material.

Each of the first core 3a and the second core 3b may comprise a polymer layer 17 arranged around the metallic water-blocking sheath 15.

As previously noted, the three cores 3a-3c are arranged in a stranded configuration. The submarine DC power cable 1 may comprise tape wound around the three stranded cores 3a-3c. The tape holds the three stranded cores 3a-3c together during production, before additional enclosing layer(s) have been provided around the stranded cores 3a-3c.

The submarine DC power cable 1 may comprise an armour 19, which comprises one or more armour layers. The armour 19, if present, is arranged around the three cores 3a-3c.

The submarine DC power cable may comprise an outermost layer 23, which may be an outer sheath or an outer serving. The outermost layer 23 is arranged around the armour 19, if present.

The submarine power cable 1 may comprise three filler profiles 21. Each filler profile 21 is arranged between adjacent pairs of cores 3a-3c inside the tape, armour 19, and the outermost layer 23. The submarine power cable 1 may comprise a fibre optic cable 25 arranged in one of the filler profiles 21.

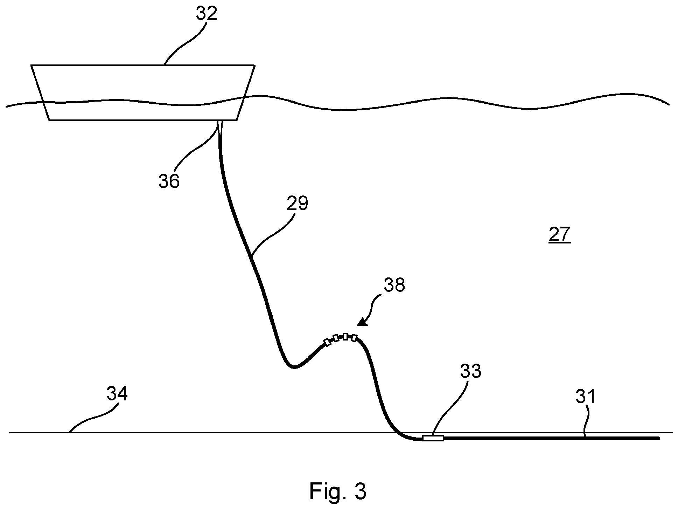

Fig. 2 shows another example of a submarine DC power cable 1'. The submarine DC power cable 1' is identical to the submarine DC power cable 1 described with reference to Fig. 1, except that the third core 3c' is different. According to the example in Fig. 3, the third core 3c' consists of a polymeric material and load-bearing element 6 embedded in the polymeric material. The load-bearing element 6 may be made of metal, such as steel, e.g., mild steel or stainless steel, or lead, aluminium, an aluminium alloy, copper, or a copper alloy, or of synthetic fibres such as aramid fibres.

According to one example, the load-bearing element 6 may be a load-bearing wire. In one example, the load-bearing wire may be a wire rope, i.e., comprise a plurality of stranded wires, which may form stranded wire subunits which in turn are arranged stranded.

The load-bearing element 6 is not connected to any power source or load when the submarine DC power cable 1' has been installed. In case the load-bearing element 6 is made of metal, the load-bearing element 6 may be connected to ground to avoid floating voltage.

The purpose of the load-bearing element 6 is to take tensional load on the submarine DC power cable 1' and to provide additional weight to the submarine DC power cable 1'. The load-bearing element 6 may be arranged centred in the third core 3c'. Thus, in cross-section of the third core 3c', the load-bearing element 6 may be arranged at the centre of the third core 3c'. Fig. 3 shows an example of a submarine power cable system 27. The submarine power cable system 27 comprises a first submarine DC power cable 29 and a second submarine DC power cable 31 connected to the first submarine DC power cable 29 by means of a joint 33.

The first submarine DC power cable 29 is a submarine DC power cable 1, 1' in the form of a dynamic power cable.

The second submarine DC power cable 31 is a submarine DC power cable 1,1' in the form of a static power cable.

The joint 33 may be a flexible joint or a factory joint but could alternatively be a rigid sea joint.

The first submarine DC power cable 29 is suspended from a floating structure 32, such as an oil and gas platform or a floating wind turbine, to the seabed 34. The first submarine DC power cable 29 may be provided with a bend stiffener or bellmouth 36, which restricts cable movement as the first submarine DC power cable 29 leaves the floating structure 32. Further, one or more buoyancy and/or ballast modules 38 may be arranged around a portion of the first submarine DC power cable 29.

The second submarine DC power cable 31 may be arranged in a trench in the seabed 34. Since the second submarine DC power cable 31 is a triple-core DC power cable, only a single trench is necessary for its installation.

The joint 33 connects the first core 3a of the first submarine DC power cable 29 with the first core 3a of the second submarine DC power cable 31 and the second core 3b of the first submarine DC power cable 29 with the second core 3b of the second submarine DC power cable 31. The connected cores 3a of the first submarine DC power cable 29 and the second submarine DC power cable 31 have the same polarity. The connected cores 3b of the first submarine DC power cable 29 and the second submarine DC power cable 31 have the same polarity.

The third core of the second submarine DC power cable 31 may according to one example be a dummy element having the same or essentially the same outer diameter as the first and the second cores of the second submarine DC power cable 31.

The third core 3c of the first submarine DC power cable 29 is typically not jointed with the third core of the second submarine DC power cable 31. Alternatively, the third core 3c of the first submarine DC power cable 29 may be jointed with the third core 3c of the second submarine DC power cable 31. Thus, according to one example, the two dummy elements may be jointed with each other.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Submarine DC power cable (1; 1') comprising:
three stranded cores (3a, 3b, 3c),
wherein a first core (3a) and a second core (3b) of the three cores (3a, 3b, 3c) are DC power cores, each comprising a conductor (4), and an insulation system (5) arranged around the conductor (4), and
wherein a third core (3c) of the three cores (3a, 3b, 3c) is a dummy element having the same outer diameter as the first and the second cores (3a, 3b), or the outer diameter of the third core (3c) deviates at most ±10% from the outer diameter of any of the first and the second cores (3a, 3b), and
wherein the third core (3c) in cross-section has a structure that is circular symmetric and which differs from a cross-sectional structure of the first and the second cores (3a, 3b).

2. Submarine DC power cable (1; 1') as claimed in claim 1, wherein the third core (3c) is a single extruded dummy element comprising a polymeric material.

3. Submarine DC power cable (1) as claimed in claim 2, wherein in any cross-section of the third core (3c), the dummy element consists of the polymeric material.

4. Submarine DC power cable (1') as claimed in claim 2, wherein the third core (3c) consists of the polymeric material and a load-bearing element (6) embedded in the polymeric material.

5. Submarine DC power cable (1') as claimed in claim 4, wherein the load-bearing element (6) is made of metal or synthetic fibres.

6. Submarine DC power cable (1') as claimed in claim 4 or 5, wherein in cross-section of the third core (3c), the load-bearing element (6) is arranged centred.

7. Submarine DC power cable (1') as claimed in any of claims 4-6, wherein the load-bearing element (6) comprises steel.

8. Submarine DC power cable (1; 1') as claimed in any of claims 2-7, wherein the polymer material is thermosetting.

9. Submarine DC power cable (1; 1') as claimed in any of claims 2-7 wherein the polymer material is thermoplastic.

10. Submarine DC power cable (1; 1') as claimed in any of the preceding claims, comprising: an outermost layer (23) arranged around the three stranded cores (3a, 3b, 3c), filler profiles (21) arranged between the outermost layer (23) and the three stranded cores (3a, 3b, 3c), and a fibre optic cable (25) arranged in one of the filler profiles (21).

11. Submarine DC power cable (1; 1') as claimed in any of the preceding claims, wherein the submarine DC power cable (1; 1') is an HVDC power cable.

12. Submarine DC power cable (1; 1') as claimed in any of the preceding claims, wherein the third core (3c) has an outer diameter which deviates at most ±5% from the outer diameter of any of the first and the second cores (3a, 3b).

13. Submarine DC power cable (1; 1') as claimed in any of the preceding claims, wherein the submarine DC power cable (1; 1') is a dynamic submarine power cable.

14. Submarine power cable system (27) comprising:
a first submarine DC power cable (29) as claimed in any of claims 1-12, and
a second submarine DC power cable (31) as claimed in any of claims 1-12, connected to the first submarine DC power cable (29) by means of a joint (33) which joints corresponding poles of the first and the second cores (3a, 3b),
wherein the first submarine DC power cable (29) is a dynamic power cable, and the second submarine DC power cable (31) is a static power cable.

15. Submarine power cable system (27) as claimed in claim 14, wherein the joint (33) is a flexible joint or a factory joint.
